(19) Europäisches Patentamt / European Patent Office / Office européen des brevets

(11) **EP 1 731 657 B1**

(12) **EUROPEAN PATENT SPECIFICATION**

(45) Date of publication and mention of the grant of the patent:
**26.01.2011 Bulletin 2011/04**

(21) Application number: **05721491.8**

(22) Date of filing: **25.03.2005**

(51) Int Cl.:
*D06M 15/41* (2006.01)    *C08L 9/04* (2006.01)
*C08L 61/04* (2006.01)    *D02G 3/48* (2006.01)
*D06M 15/693* (2006.01)    *D07B 1/16* (2006.01)

(86) International application number:
**PCT/JP2005/005564**

(87) International publication number:
**WO 2005/098123 (20.10.2005 Gazette 2005/42)**

(54) **COMPOSITION FOR CORD COATING, CORD FOR RUBBER REINFORCEMENT MADE WITH THE SAME, AND RUBBER PRODUCT MADE WITH THE SAME**

ZUSAMMENSETZUNG FÜR CORDBESCHICHTUNG, DAMIT HERGESTELLTER CORD FÜR GUMMIARMIERUNG UND DAMIT HERGESTELLTES GUMMIPRODUKT

COMPOSITION POUR REVETEMENT DE CORDE, CORDE POUR LE RENFORT DE CAOUTCHOUC FABRIQUE A PARTIR DE CETTE COMPOSITION, ET PRODUIT DE CAOUTCHOUC FABRIQUE A PARTIR DE CETTE CORDE

(84) Designated Contracting States:
**DE FR GB IT**

(30) Priority: **30.03.2004 JP 2004097958**

(43) Date of publication of application:
**13.12.2006 Bulletin 2006/50**

(73) Proprietor: **Nippon Sheet Glass Company, Limited Tokyo 108-6321 (JP)**

(72) Inventors:
- **KAJIHARA, Keisuke,**
  **c/o Nippon Sheet Glass Company, Limited**
  **Tokyo 108-6321 (JP)**
- **MIZUKOSHI, Naoya,**
  **Nippon Sheet Glass Company, Limited**
  **Tokyo 108-6321 (JP)**

(74) Representative: **Hart-Davis, Jason et al**
**Cabinet Beau de Loménie**
**158, rue de l'Université**
**75340 Paris Cedex 07 (FR)**

(56) References cited:
| | |
|---|---|
| **EP-A- 0 285 094** | **EP-A- 0 798 356** |
| **WO-A1-94/12443** | **JP-A- 2 216 281** |
| **JP-A- 6 212 572** | **JP-A- 2001 146 686** |
| **JP-A- 2003 221 785** | **JP-A- 2004 068 241** |
| **JP-A- 2004 100 059** | **US-A- 3 895 163** |

Remarks:
The file contains technical information submitted after the application was filed and not included in this specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 731 657 B1

## EP 1 731 657 B1

**Description**

<u>Technical Field</u>

The present invention relates to a composition for cord coating, a cord for rubber reinforcement made with the same, and a rubber product made with the same.

<u>Background Art</u>

As reinforcing materials for rubber products such as a rubber belt, and the like, cords using reinforcing fibers such as a glass fiber and an aramid fiber have been used. In addition, a toothed belt used for a camshaft drive of an automotive internal-combustion engine is required to have high dimensional stability in order to maintain the appropriate timing. Furthermore, recently, in order to apply the rubber belts not only to the camshaft drive but also to the use with high loads such as an injection pump drive, or power transmission in an industrial machine, high strength and high elasticity are required.

These rubber products repeatedly are subjected to bending stress. Because of this stress, the performance deteriorates due to the generated bending fatigue, and a peeling-off between the reinforcing material and the rubber in which the reinforcing material is embedded may be generated. Furthermore, in these rubber products, the reinforcing cord is frayed, and thus the strength is apt to weaken. Such phenomenon appears to be accelerated by the presence of heat and water. To avoid this problem, various treatment agents have been applied to the reinforcing cords.

Various treatment agents have been proposed. For example, JP 63(1988)·270877A proposes a composition of which the main components are a resorcinol-formaldehyde condensation product and a nitrile group-containing highly saturated polymer rubber having an iodine value of 120 or less.

JP 6(1994)-212572A proposes a treatment agent of which the main components are a water-soluble condensation product of resorcinol-formaldehyde and a nitrile group-containing highly saturated copolymer rubber latex having an iodine value of 120 or less. The nitrile group-containing highly saturated copolymer rubber latex is obtained though hydrogenation of a nitrile group-containing unsaturated copolymer obtained using an emulsion polymerization method.

JP 8(1996)-120573A proposes a treatment agent including a water-soluble condensation product of resorcinol-formaldehyde, a nitrile group-containing highly saturated copolymer having an iodine value of 120 or less, and methacrylate.

JP 8(1996)-333564A proposes an adhesive composition in which a resorcinol-formaldehyde resin and an aromatic-based epoxy resin are mixed in a latex of a highly saturated nitrile rubber containing a carboxyl group.

The application of the above-described conventional treatment agents can improve the heat resistance of the reinforcing cords. Temperatures at which the rubber belt is used, however, are broad, ranging from a low temperature to a high temperature. Furthermore, bending fatigue resistance and dimensional stability at room temperature are also important properties required for the reinforcing cords.

The use of the treatment agent including the nitrile group-containing highly saturated polymer having an iodine value of 120 or less allows high heat resistance. The resistance of the conventional treatment agent against a bonding strength deterioration caused due to friction of fibers constituting the reinforcing cord, and against fraying-caused deterioration was not satisfactory.

On the other hand, a treatment agent using a vinylpyridine-butadiene-styrene terpolymer latex has good resistance against fraying-caused deterioration caused due to friction of fibers constituting the reinforcing cord, and has good bending fatigue resistance and dimensional stability at a room temperature. In a high-temperature environment, however, the polymer becomes stiffened by thermal deterioration, so that bending fatigue resistance may decrease.

<u>Disclosure of Invention</u>

One object of the present invention is to provide a composition for cord coating capable of constituting a reinforcing cord having high resistance against bending and having high dimensional stability at room and high temperatures. In addition, another object of the present invention is to provide a reinforcing cord using the composition, and a rubber product reinforced by the cord.

In order to satisfy the above-described objects, a composition for cord coating of the present invention comprises a latex of a first rubber, a phenol resin, and a water-soluble condensation product of resorcinol-formaldehyde so that a ratio of the first rubber to a solid content of the composition, a ratio of the phenol resin thereto, and the ratio of the water soluble condensation product thereto are 30 to 95 wt.%, 0.01 to 30 wt.%, and 2 to 15 wt.%, respectively, wherein the first rubber is a nitrile group-containing highly saturated polymer rubber having an iodine value of 120 or less, and the water-soluble condensation product is a novolac-type condensation product. It is noted that the "solid content" refers to a component excluding a solvent or a dispersion medium.

Furthermore, a reinforcing cord for rubber reinforcement of the present invention comprises a reinforcing fiber and a coating layer formed so that the reinforcing fiber is coated, wherein the coating layer is formed of a composition for cord coating, the composition for cord coating includes a latex of a first rubber, a phenol resin, and a water-soluble condensation product of resorcinol-formaldehyde so that a ratio of the first rubber to a solid content of the composition, the ratio of the phenol resin thereto, and the ratio of the water-soluble condensation product are 30 to 95 wt.%, 0.01 to 30 wt.%, and 2 to 15 wt.%, respectively, the first rubber is a nitrile group-containing highly saturated polymer rubber having an iodine value of 120 or less, and the water-soluble condensation product is a novolac-type condensation product.

In addition, a rubber product of the present invention is a rubber product reinforced by the reinforcing cord for rubber reinforcement of the above-described invention.

The use of a composition (adhesive agent) of the present invention for forming a coating layer of a reinforcing cord allows a strong bonding between a rubber serving as a matrix and a reinforcing cord. Furthermore, a reinforcing cord to be coated by using the composition has good dimensional stability and bending fatigue resistance at room and high temperatures. Because of this, the reinforcing cord of the present invention is suitable for environments in which bending stress is applied under broad temperature ranges, that is, suitable for a reinforcing cord of an automotive timing belt, for example.

The use of the reinforcing cord coated with the composition of the present invention provides a rubber product having high bending fatigue resistance and high dimensional stability in a room temperature environment, and having high bending fatigue resistance in a high temperature environment.

Brief Description of Drawings

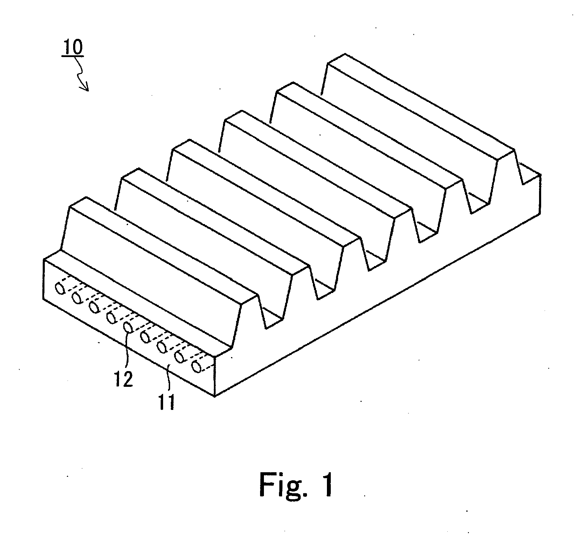

FIG. 1 is a view schematically showing one example of a rubber product of the present invention.

Description of the Preferred Embodiments

Hereinafter, embodiments of the present invention will be described with examples. It is noted that the present invention is not limited to the following examples.

Composition for Cord Coating

A composition for cord coating of the present invention includes a latex of a first rubber, a phenol resin, and a water-soluble condensation product of resorcinol-formaldehyde so that the ratio of the first rubber to a solid content, the ratio of the phenol resin thereto, and the ratio of the water-soluble condensation product thereto are 30 to 95 wt.%, 0.01 to 30 wt.%, and 2 to 15 wt.%, respectively. The first rubber has an iodine value of 120 or less, and is a highly saturated polymer rubber containing a nitrile group (-CN). The water-soluble condensation product of resorcinol-formaldehyde (hereinafter, may be referred to as an "R-F condensation product") is a novolac-type condensation product. The use of such composition (treatment agent) results in a reinforcing cord with desirable properties.

First Rubber

In view of heat resistance of the coating composition, the iodine value of the first rubber needs to be 120 or less. A preferable iodine value is 0 to 100, and a more preferable iodine value is 0 to 50. It is noted that the iodine value was evaluated according to K-0070-1992 of Japanese Industrial Standards (JIS).

The ratio of the first rubber to a solid content of the coating composition is within a range of 30 to 95 wt.%, preferably is within a range of 40 to 90 wt.%, and particularly preferably is within a range of 60 to 85 wt.%. When this ratio is less than 30 wt.%, the heat resistance of the cord will not sufficiently improve. When this ratio is above 95 wt.%, a relative ratio of the R-F condensation product, which is an essential component, decreases, so that adhesiveness with the rubber deteriorates.

A latex of a first rubber can be a latex formed of a single rubber, or can be a latex in which latexes of a plurality of kinds of rubber are mixed. Examples of the first rubber include:

(1) Hydrogenated rubber of a butadiene-acrylonitrile copolymer rubber, an isoprene-butadiene-acrylonitrile copolymer rubber, an isoprene-acrylonitrile copolymer rubber, and the like,
(2) A butadiene-methylacrylate-acrylonitrile copolymer rubber, a butadiene-acrylate-acrylonitrile copolymer rubber, and the like, and a hydrogenated material of these rubbers, and
(3) A butadiene-ethylene-acrylonitrile copolymer rubber, a butadiene-ethoxyethylacrylate-vinylchloroacetate-acrylonitrile copolymer rubber, and a butadiene-ethoxyethylacrylate-vinylnorbornene-acrylonitrile copolymer rubber.

These rubbers can be obtained using the conventional polymerization method or the conventional hydrogenation method. A preferable example of the latex of a first rubber is a latex of a hydrogenated nitrile rubber, such as Zetpol2020 (Trademark, Iodine Value 28) manufactured by JAPAN ZEON CORPORATION.

Phenol Resin

The phenol resin is an essential component, and is added for preventing fraying-caused deterioration caused by friction of the cords and for improving bonding strength of the cords. The phenol resin of the present invention can be a phenol resin obtained through reaction between phenol and formaldehyde, for example, or can be a phenol resin obtained through reaction between phenols and formaldehyde.

The phenol resin can be a novolac-type phenol resin obtained through reaction between phenol or phenols and formaldehyde under the influence of an acid catalyst. Furthermore, the phenol resin can be a resole-type phenol resin obtained through reaction between phenol or phenols and formaldehyde under the influence of an alkaline catalyst. The use of the novolac-type phenol resin makes it possible to prevent an alkaline component from being generated from the phenol resin.

The ratio of the phenol resin to a solid content of the coating composition is within a range of 0.01 to 30 wt.%, and preferably is within a range of 0.03 to 20 wt.%, or within a range of 7 to 20 wt.%, for example. When the ratio of the phenol resin is less than 0.01 wt.%, it is not possible to form a coating layer having high bonding strength with the rubber. On the other hand, when the ratio is above 30 wt.%, a coating layer formed of the coating composition becomes too hard. As a result, the bending fatigue resistance of the reinforcing cord deteriorates.

It is noted that the coating composition of the present invention may include resins such as a polyurethane resin, a urea resin, a melanin resin, and an epoxy resin, besides the phenol resin.

Water-Soluble Condensation Product of Resorcinol-Formaldehyde

In the coating composition of the present invention, the R-F condensation product is an essential component for obtaining adhesiveness with a rubber.

The ratio of the R-F condensation product to a solid content of the coating composition is within a range of 2 to 15 wt.%, and more preferably is within a range of 3 to 12 wt.%. When the ratio of the R-F condensation product is less than 2 wt.%, it is not possible to form a coating layer having high adhesiveness with the rubber. On the other hand, when the ratio is above 15 wt.%, a coating layer formed of the coating composition becomes too hardened. As a result, the bending fatigue resistance of the reinforcing cord deteriorates.

The R-F condensation product used in the present invention is a novolac-type addition condensation product obtained through reaction between resorcinol and formaldehyde under the influence of an acid catalyst. In particular, a condensation product obtained through reaction between resorcinol (R) and formaldehyde (F) in a molar ratio of R:F=2:1 to 1:3 is preferable.

The novolac-type R-F condensation product, which has a higher degree of polymerization compared to the resole-type R-F condensation product, can form a denser film. Therefore, a coating layer having high environment resistance can be formed by using the novolac-type R-F condensation product.

In addition, in the resole-type R-F condensation product, a number of hydroxyl groups exist, and an alkaline component remains. Thus, when the resole-type R-F condensation product and a glass fiber that is a reinforcing fiber are used, the glass fiber tends to be eroded at a high temperature. To avoid this, when the glass fiber is used as the reinforcing fiber, it is particularly important to use the novolac-type R-F condensation product.

Latex of Second Rubber

The composition of the present invention may include a latex of a second rubber different from the first rubber. The latex of a second rubber, which is not essential, is preferably included when flexibility of a cord and cord-to-belt adhesiveness are required. When the composition of the present invention includes the second rubber, the ratio of the second rubber to a solid content of the composition is preferably 60 wt.% or less, more preferably 50 wt.% or less, and within a range of 5 wt.% to 50 wt.%, for example. When this ratio is above 60 wt.%, it may not be possible to obtain satisfactory heat resistance and flexibility in bending.

The latex of a second rubber can be at least one latex selected from the group consisting of a butadiene-styrene copolymer latex, a dicarboxylated butadiene-styrene copolymer latex, a vinylpyridine-butadiene-styrene terpolymer latek, an isoprene rubber latex, a chloroprene rubber latex, a chlorosulfonated polyethylene latex, and an acrylonitrile-butadiene copolymer latex having an iodine value of above 120.

The coating composition of the present invention may contain a base (for example, ammonia) for adjusting pH, as required. Furthermore, the coating composition of the present invention may contain additives such as stabilizer, thickener, and antioxidant.

Furthermore, a solvent (dispersion medium) of the composition of the present invention is water, for example. Besides water, alcohols such as methanol, ketones such as methyl ethyl ketone, and the like, may be included. The viscosity of the composition can be changed depending on a solvent amount. The composition of the present invention can be prepared by mixing the above-described components.

Reinforcing Cord for Rubber Reinforcement

The cord for reinforcing a rubber of the present invention is provided with a reinforcing fiber and a coating layer formed so that the reinforcing fiber is coated. The coating layer is formed of the above-described composition for cord coating of the present invention. The composition for cord coating has already been described above, and therefore, overlapping portions will be omitted.

In the reinforcing cord of the present invention, the weight of a coating layer preferably is within a range of 5 to 40% of the weight of the reinforcing fiber, and more preferably is within a range of 10 to 35%. When the ratio of the coating layer is too low, an amount coated on the reinforcing cord coated by the coating layer is insufficient. In addition, when the ratio is too high, it becomes difficult to control the amount coated on the reinforcing cord coated by the coating layer, so that it becomes difficult to form an even-surfaced coating layer. The amount coated on the reinforcing cord by the coating layer needs to be appropriately set depending on kinds of fibers. For example, in a case of the glass fiber, the weight of the coating layer preferably is within a range of 5 to 35% of the weight of the reinforcing fiber.

In the above-described reinforcing cord of the present invention, the reinforcing fiber can be at least one fiber selected from the group consisting of a glass fiber, an aramid fiber and a carbon fiber. Only one type of fiber may be used, or a plurality of these fibers may be mixed for use. It is noted that the reinforcing fiber is not limited to these fibers, and another fiber having a necessary strength for reinforcing a rubber product may be used.

Among the reinforcing fibers, the glass fiber has advantages of having high bending fatigue resistance and dimensional stability. In the composition of the present invention, the novolac-type R-F condensation product formed under the influence of the acid catalyst is used, and thus, even when the glass fiber is used, the glass fiber deteriorates only a little.

The reinforcing fiber may be a plurality of bundled filaments. The plurality of filaments may be twisted, or need not be twisted. In addition, the reinforcing fiber can be a plurality of bundled fibers. The plurality of fibers may be twisted, or need not be twisted. When the reinforcing fiber is the glass fiber, in general, approximately 50 to 2000 filaments are bundled to form one glass fiber. In one example of the reinforcing cord of the present invention, 1 to 100 of such glass fibers are bundled and used.

In the reinforcing cord of the present invention, the above-described coating layer further may be coated with another coating layer. The other coating layer is formed for improving adhesiveness between the reinforcing cord and a rubber (matrix rubber) reinforced by the reinforcing cord. The material of the other coating layer is selected according to the kinds of matrix rubbers, and a well-known material can be applicable therefor. For example, a composition including chlorosulfonated polyethylene (CSM) and a cross-linker can be applicable.

Hereinafter, one example of a manufacturing method of the reinforcing cord for rubber reinforcement of the present invention will be described.

Firstly, the reinforcing fiber is dipped into the above-described composition (liquid) for coating, and subsequently excess liquid is removed and the surface of the fiber is coated with the composition. Next, the solvent is removed from the composition to form a coating layer that coats the fiber. The solvent can be removed by an arbitrary method. For example, air drying, drying under reduced pressure, drying by heating, and the like, may be employed.

It is noted that the reinforcing fiber may be coated by a binder agent that is applied during fiber spinning. Furthermore, a pretreatment agent for improving affinity with the coating composition, or for improving adhesiveness with the coating composition may be applied to the reinforcing fiber.

Next, a desired number of fibers coated with the coating composition are gathered, and are twisted so as to obtain the reinforcing cord. A device used for plying or twisting the reinforcing fiber is not particularly limited. For example, a ring twisting frame, a flyer twisting frame, a twisting machine, and the like, can be used. The number of twists in the twisting is preferably determined according to the fiber to be used. For example, in the case of a glass fiber cord, the number of twists is preferably 0.25 times/25 mm to 10.0 times/25 mm. Furthermore, the twisting can be done by the plying with several steps, depending on the thickness or specification of the cord. The twisting direction is not limited. In a case of the glass fiber cord, it is preferable that the plying is divided into two steps to form the fiber cord. More specifically, it is preferable to form the fiber cord by, firstly, forming a strand by bundling a several number of glass fibers and applying primary twisting thereto, and subsequently bundling and finally twisting a several number of the strands.

Rubber Product

A rubber product of the present invention is a rubber product reinforced by a reinforcing cord for rubber reinforcement of the present invention. The kinds of rubber products are not limited, and the rubber product includes a tire, a rubber hose or belts such as a toothed belt, and a V-belt, for example. The reinforcing cord is embedded in a rubber portion of the rubber product, or arranged on the surface of the rubber portion. A method for arranging the reinforcing cord is not particularly limited. For example, the reinforcing cord is embedded in the uncured rubber portion, and subsequently, the rubber portion is cured. Thereby, the rubber portion is reinforced by the reinforcing cord.

The rubber of the rubber portion is not particularly limited, and examples of the rubber include a chloroprene rubber, a butyl rubber, a butadiene rubber, a nitrile rubber, a hydrogenated nitrile rubber, an ethylene propylene rubber, and a hypalon rubber. Among these rubbers, the reinforcing cord for rubber reinforcement of the present invention is preferably used for reinforcing a rubber portion made of the hydrogenated nitrile rubber.

One example of a toothed belt of the present invention is schematically shown in FIG. 1. The toothed belt 10 in FIG. 1 is provided with a rubber portion 11 and a reinforcing cord 12 embedded in the rubber portion. It is noted that the configuration shown in FIG.1 is one example, and the present invention is not limited thereto.

EXAMPLE

Hereinafter, the present invention will be described in more detail with reference to examples. It is noted that in the following examples, Zetpol2020 (Iodine Value 28) manufactured by JAPAN ZEON CORPORATION was used as a highly saturated polymer containing a nitrile group. Furthermore, Yuka-resin KE912-1 (emulsion of a resole-type phenol resin) by YOSHIMURA OIL CHEMICAL Co., Ltd. was used as a phenol resin. As R-F condensation products of examples 1 to 5 and those of comparative examples 1 to 4, a novolac-type condensation product obtained through reaction between resorcinol and formaldehyde in a molar ratio of 1:1 under the influence of an acid catalyst was used. Furthermore, as the R-F condensation product of a comparative example 5, a resole-type condensation product obtained through reaction between resorcinol and formaldehyde in a molar ratio of 1:1 under the influence of an alkaline catalyst was used.

Examples 1 to 5

Alkali-free glass filaments of 9 $\mu$m in diameter were spun, and bound by using binder to obtain a glass fiber of 33.7 texes. Three of these glass fibers are plied, and impregnated with a coating composition (solid content 30 wt.%) shown in Table 1, which was followed by thermal processing. Thereby, a glass fiber cord was obtained. It is noted that the coating composition contained ammonia water ($NH_4OH$) for pH adjustment, and water as a solvent. An application ratio of the coating composition was adjusted so that the weight of a coating layer formed of the composition was 20% of the weight of the glass fiber. Below Table 1 shows ratios of a composition (parts by weight), and weight ratios (wt.%) of a solid content.

Table 1

| Components | Example 1 | Example 2 | Example 3 | Example 4 | Example 5 |
|---|---|---|---|---|---|
| A component (parts by weight) (Solid content: wt.%) | 49.5 (66) | 65.0 (86) | 30.0 (40) | 57.0 (77) | 46.0 (60) |
| B component (parts by weight) (Solid content: wt.%) | 16.5 (22) | 1.0 (1) | 36.0 (48) | 13.0 (17) | 12.5 (16) |
| C component (parts by weight) (Solid content: wt.%) | 4.5 (7) | 4.5 (7) | 4.5 (7) | 0.5 (1) | 12.0 (19) |
| D component (parts by weight) (Solid content: wt.%) | 3.0 (5) | 3.0 (5) | 3.0 (5) | 3.0 (5) | 3.0 (5) |
| $NH_4OH$ water | 1.5 | 1.5 | 1.5 | 1.5 | 1.5 |
| Water | 25.0 | 25.0 | 25.0 | 25.0 | 25.0 |
| A component: nitrile group-containing highly saturated polymer rubber latex (containing solid content of 40 wt.%) | | | | | |

(continued)

| Components | Example 1 | Example 2 | Example 3 | Example 4 | Example 5 |
|---|---|---|---|---|---|
| B component: vinylpyridine-butadiene-styrene terpolymer latex (containing a solid content of 40 wt.%) | | | | | |
| C component: phenol resin (containing a solid content of 50 wt.%) | | | | | |
| D component: R-F condensation product (containing a solid content of 50 wt.%, novolac-type) | | | | | |

Subsequently, the above-described glass fiber was primary twisted at a rate of 2.0 times/25 mm. Then, 11 glass fiber cords primary-twisted were bundled, and finally twisted at a rate of 2.0 times/25 mm. Thus, the reinforcing cords for rubber reinforcement of examples 1 to 5 were produced.

Example 6

A second coating composition (liquid) having a composition shown in Table 2 was applied to the reinforcing cord for rubber reinforcement obtained in example 1, and the reinforcing cord was dried. As a result, a reinforcing cord for rubber reinforcement of example 6 was obtained. The ratio (solid content) of the coating of the second coating composition to the reinforcing cord was 5 wt.%.

Table 2

| Components | Ratio (parts by weight) |
|---|---|
| Methylenebis (4-phenylisocyanate) | 4.5 |
| CSM | 5.25 |
| P-dinitrosobenzene | 2.25 |
| Carbon Black | 3.0 |
| Mixed Solvent of Xylene and Trichloroethylene (Mixed Ratio(Weight Ratio) between Xylene and Trichloroethylene =1.5:1.0 | 85.0 |

Property Evaluation

Two matrix rubber sheets (10 mm in width, 300 mm in length, and 1 mm in thickness) formed according to a composition shown in following Table 3 were prepared. One reinforcing cord of 300 mm in length of the example was placed on one matrix rubber sheet, and the other matrix rubber sheet was piled on top thereof. Subsequently, the top and bottom surfaces of the rubber sheets were pressed and cured for 20 minutes at 150˚C. Thereby, a belt-shaped specimen was produced.

Table 3

| Components | Ratio (parts by weight) |
|---|---|
| Hydrogenated Acrylonitrile-Butadiene Rubber | 100 |
| Zinc Oxide, Grade 1 | 5 |
| Stearic Acid | 1.0 |
| HAF Carbon | 60 |
| Trioctyl Trimellitate | 10 |
| 4,4-($\alpha$, $\alpha$-dimethylbenzyl)diphenylamine | 1.5 |
| 2-mercaptobenzimidazole Zinc Salt | 1.5 |
| Sulfur | 0.5 |
| Tetramethylthiuramsulfide | 1.5 |
| Cyclohexyl-Benzothiazylsulfenamide | 1.0 |

Next, the specimen was bended repeatedly by a bending tester for evaluating durability against bending fatigue. The bending tests were carried out by bending the specimen with reciprocation of 20000 times. The bending tests were performed in a room-temperature atmosphere, and in an atmosphere at 140°C. Tensile strengths (per one cord) before and after the bending tests were measured. Then, the rate of the tensile strength after the test to the tensile strength before the test was calculated as tensile-strength retention rate (%). The higher the tensile-strength retention rate, the higher the bending fatigue resistance.

In addition, before and after the bending test, a load of 400N was applied to each reinforcing cord, and each elongation (%) was measured. The smaller the elongation, the more superior the dimensional stability. Furthermore, the rate of the elongation after the test to the elongation before the test also was calculated.

Furthermore, the reinforcing cords of 200 mm in length were aligned on a matrix rubber sheet having the components shown in Table 2 so that the width reached 25 mm in length, and were pressed and cured for 20 minutes at 150°C. As a result, a specimen was obtained. Subsequently, strength was measured by separating the reinforcing cords from the matrix rubber. The adhesive strength was a value obtained with the specimen of 25 mm in width. These evaluation results were shown in Table 4. It is noted that Table 4 also shows a linear density (the weight per 1000 m) and the diameter of the reinforcing cord, and the strength of a single reinforcing cord.

Table 4

| | linear density (g/1000) | Cord diameter (mm) | Strength (N) | Tensile-strength retention rate (%) RT/140 | Load elongation before bending (%) RT/140 | Load elongation after bending (%) RT/140 | Elongation change rate RT/140 | Adhesive strength (N/25 mm) |
|---|---|---|---|---|---|---|---|---|
| Ex. 1 | 1430 | 1.05 | 880 | 81/62 | 1.6 | 1.6/1.6 | 0/0 | 219 |
| Ex. 2 | 1450 | 1.09 | 870 | 89/62 | 1.5 | 1.6/1.7 | 7/13 | 191 |
| Ex. 3 | 1440 | 1.04 | 900 | 53/59 | 1.5 | 1.4/1.6 | -7/7 | 197 |
| Ex. 4 | 1460 | 1.06 | 880 | 82/60 | 1.6 | 1.8/1.8 | 13/13 | 177 |
| Ex. 5 | 1440 | 1.08 | 890 | 75/60 | 1.6 | 1.6/1.5 | 0/-6 | 216 |
| Ex. 6 | 1450 | 1.09 | 920 | 85/88 | 1.6 | 1.6/1.6 | 0/0 | 241 |

RT: test results at room temperature, 140: test results at 140°C

Load elongation: elongation when 400N of load is applied to cord

Elongation change rate: {(elongation (%) before bending test/elongation (%) after bending test)−1}×100

EP 1 731 657 B1

Comparative Examples 1 to 5

In comparative examples 1 to 5, the reinforcing cord was produced by using a similar method to the case of example 1 except that a coating composition having a composition of Table 5 was used instead of the coating composition having the composition of Table 1. It is noted that regarding the R-F condensation products, the novolac-type condensation products were used in comparative examples 1 to 4, and the resol-type condensation product was used in comparative example 5.

Table 5

| Components | Comparative Ex.1 | Comparative Ex.2 | Comparative Ex.3 | Comparative Ex.4 | Comparative Ex. 5 |
|---|---|---|---|---|---|
| A component (parts by weight) | 71.5 | 0.0 | 10.0 | 58.0 | 49.5 |
| (Solid content: wt.%) | (97) | (0) | (13) | (77) | (66) |
| B component (parts by weight) | 0.0 | 49.5 | 56.0 | 13.5 | 16.5 |
| (Solid content: wt.%) | (0) | (62) | (75) | (20) | (22) |
| C component (parts by weight) | 0.0 | 21.0 | 4.5 | 0.0 | 4.5 |
| (Solid content: wt.%) | (0) | (33) | (7) | (0) | (7) |
| D component (parts by weight) | 2.0 | 3.0 | 3.0 | 2.0 | 3.0 |
| (Solid content: wt.%) | (3) | (5) | (5) | (3) | (5) |
| $NH_4OH$ water | 1.5 | 1.5 | 1.5 | 1.5 | 1.5 |
| Water | 25.0 | 25.0 | 25.0 | 25.0 | 25.0 |

| | |
|---|---|
| A component : | nitrile group-containing highly saturated polymer rubber latex (containing solid content of 40 wit.%) |
| B component | :vinylpyridine-butadiene-styrene terpolymer latex (containing a solid content of 40 wt.%) |
| C component | :phenol resin (containing solid content of 50 wit.%) |
| D component | :R-F condensation product (containing solid content of 50 wt.%, novolac-type) comparative exs. 1 to 4 are novolac-type, and comparative ex. 5 is resol-type |

The reinforcing cords of comparative examples 1 to 5 were evaluated by using a similar method to the case of the example 1. The evaluation results were shown in Table. 6.

Table 6

| | linear density (g/ 1000) | Cord diameter (mm) | Strength (N) | Tensile-strength retention rate (%) RT/140 | Load elongation before bending (%) RT/140 | Load elongation after bending (%) RT/140 | Elongation change rate RT/ 140 | Adhesive strength (N/25 mm) |
|---|---|---|---|---|---|---|---|---|
| C.Ex. 1 | 1470 | 1.07 | 890 | 80/88 | 1.5 | 1.8/1.8 | 20/20 | 161 |
| C.Ex. 2 | 1440 | 1.06 | 900 | 82/45 | 1.5 | 1.4/1.6 | -7/7 | 228 |
| C.Ex. 3 | 1440 | 1.04 | 900 | 80/46 | 1.5 | 1.4/1.6 | -7/7 | 209 |
| C.Ex. 4 | 1430 | 1.06 | 890 | 80/79 | 1.5 | 1.8/1.8 | 20/20 | 168 |
| C.Ex. 5 | 1430 | 1.05 | 880 | 82/55 | 1.6 | 1.6/1.8 | 0/13 | 225 |

RT: test results at room temperature, 140: test results at 140˚C

Load elongation: elongation when 400N of load is applied to cord

Elongation change rate: {(elongation (%) before bending test/elongation (%) after bending test)−1}×100

EP 1 731 657 B1

As Table 6 shows, the reinforcing cords in comparative examples 2, 3 exhibited low strength retention rate against the bending at a high temperature. Furthermore, the reinforcing cords in comparative examples 1, 4 exhibited low dimensional stability. On the other hand, the reinforcing cord of the present invention exhibited both high durability against the bending fatigue and high dimensional stability. In addition, as the evaluation result of the reinforcing cord of comparative example 5 shows, when the resol-type R-F condensation product was used, the strength retention rate against the bending at a high temperature was low. On the other hand, the reinforcing cord of the present invention exhibited high durability against the bending and high dimensional stability at both room and high temperatures.

As described above, the rubber reinforced by the reinforcing cord of the present invention had high durability against the bending and superior dimensional stability at room and high temperatures.

Industrial Applicability

The present invention can be applicable as a composition for forming a coating layer of a reinforcing cord for rubber reinforcement, a reinforcing cord for rubber reinforcement, and a rubber product reinforced by the reinforcing cord for rubber reinforcement.

**Claims**

1.  A composition for cord coating comprising a latex of a first rubber, a phenol resin, and a water-soluble condensation product of resorcinol-formaldehyde so that a ratio of the first rubber to a solid content of the composition, a ratio of the phenol resin thereto, and the ratio of the water soluble condensation product thereto are 30 to 95 wt.%, 0.01 to 30 wt.%, and 2 to 15 wt.%, respectively, wherein
    the first rubber is a nitrile group-containing highly saturated polymer rubber having an iodine value of 120 or less, and
    the water-soluble condensation product is a novolac-type condensation product.

2.  The composition for cord coating according to claim 1, comprising a latex of a second rubber different from the first rubber so that a ratio of the second rubber to a solid content of the composition is 60 wt.% or less.

3.  The composition for cord coating according to claim 2, wherein the latex of a second rubber is at least one latex selected from the group consisting of a butadiene-styrene copolymer latex, a dicarboxylated butadiene-styrene copolymer latex, a vinylpyridine-butadiene-styrene terpolymer latek, an isoprene rubber latex, a chloroprene rubber latex, a chlorosulfonated polyethylene latex, and an acrylonitrile-butadiene copolymer latex having an iodine value of above 120.

4.  A reinforcing cord for rubber reinforcement comprising a reinforcing fiber and a coating layer formed so that the reinforcing fiber is coated, wherein
    the coating layer is formed of a composition for cord coating,
    the composition for cord coating includes a latex of a first rubber, a phenol resin, and a water-soluble condensation product of resorcinol-formaldehyde so that a ratio of the first rubber to a solid content of the composition, the ratio of the phenol resin thereto, and the ratio of the water-soluble condensation product are 30 to 95 wt.%, 0.01 to 30 wt.%, and 2 to 15 wt.%, respectively,
    the first rubber is a nitrile group-containing highly saturated polymer rubber having an iodine value of 120 or less, and
    the water-soluble condensation product is a novolac-type condensation product.

5.  The reinforcing cord for rubber reinforcement according to claim 4, wherein the composition for cord coating comprises a latex of a second rubber different from the first rubber so that a ratio of the second rubber to a solid content of the composition is 60 wt.% or less.

6.  The reinforcing cord for rubber reinforcement according to claim 5, wherein the latex of a second rubber is at least one latex selected from the group consisting of a butadiene-styrene copolymer latex, a dicarboxylated butadiene-styrene copolymer latex, a vinylpyridine-butadiene-styrene terpolymer latek, an isoprene rubber latex, a chloroprene rubber latex, a chlorosulfonated polyethylene latex, and an acrylonitrile-butadiene copolymer latex having an iodine value of above 120.

7.  The reinforcing cord for rubber reinforcement according to claim 4, wherein a weight of the coating layer is in a range of 5 to 40% of a weight of the reinforcing fiber.

**8.** The reinforcing cord for rubber reinforcement according to claim 4, wherein the reinforcing fiber is at least one fiber selected from the group consisting of a glass fiber, an aramid fiber and a carbon fiber.

**9.** The reinforcing cord for rubber reinforcement according to claim 4, wherein the coating layer is further coated with another coating layer.

**10.** A rubber product reinforced by the reinforcing cord for rubber reinforcement according to claim 4.

**Patentansprüche**

**1.** Zusammensetzung zur Gurtbeschichtung, umfassend ein Latex aus einem ersten Gummi, ein Phenolharz und ein wasserlösliches Kondensationsprodukt von Resorcin-Formaldehyd derart, daß ein Verhältnis des ersten Gummis zu einem Feststoffgehalt der Zusammensetzung, ein Verhältnis des Phenolharzes dazu und ein Verhältnis des wasserlöslichen Kondensationsprodukts dazu 30 - 95 Gew.-%, 0,01 - 30 Gew.-% bzw. 2 - 15 Gew.-% sind, wobei das erste Gummi ein hochgesättigtes nitrilgruppenhaltiges Polymergummi mit einem Jodwert von 120 oder weniger ist und
das wasserlösliche Kondensationsprodukt ein Kondensationsprodukt vom Novolac-Typ ist.

**2.** Zusammensetzung zur Gurtbeschichtung nach Anspruch 1, umfassend ein Latex aus einem zweiten Gummi, das von dem ersten Gummi derart verschieden ist, daß ein Verhältnis des zweiten Gummis zu einem Feststoffgehalt der Zusammensetzung 60 Gew.-% oder weniger ist.

**3.** Zusammensetzung zur Kordbeschichtung nach Anspruch 2, wobei das Latex aus einem zweiten Gummi wenigstens ein aus der aus einem Butadien-Styrol-Copolymer-Latex, einem dicarboxylierten Butadien-Styrol-Copolymer-Latex, einem Vinylpyridin-Butadien-Styrol-Terpolymer-Latex, einem Isoprengummi-Latex, einem Chloroprengummi-Latex, einem chlorsulfonierten Polyethylen-Latex und einem Acrylnitril-Butadien-Copolymer-Latex mit einem Jodwert über 120 bestehenden Gruppe gewähltes Latex ist.

**4.** Verstärkungsgurt zur Gummiverstärkung, umfassend eine Verstärkungsfaser und eine Beschichtungsschicht, die derart ausgebildet ist, daß die Verstärkungsfaser beschichtet ist, wobei
die Beschichtungsschicht aus einer Zusammensetzung zur Gurtbeschichtung ausgebildet ist,
die Zusammensetzung zur Gurtbeschichtung ein Latex aus einem ersten Gummi, ein Phenolharz und ein wasserlösliches Kondensationsprodukt von Resorcin-Formaldehyd derart umfaßt, daß ein Verhältnis des ersten Gummis zu einem Feststoffgehalt der Zusammensetzung, ein Verhältnis des Phenolharzes dazu und ein Verhältnis des wasserlöslichen Kondensationsprodukts dazu 30 - 95 Gew.-%, 0,01 - 30 Gew.-% bzw. 2 - 16 Gew.-% sind,
das erste Gummi ein hochgesättigtes nitrilgruppenhaltiges Polymergummi mit einem Jodwert von 120 oder weniger ist und
das wasserlösliche Kondensationsprodukt ein Kondensationsprodukt vom Novolac-Typ ist.

**5.** Verstärkungsgurt zur Gummiverstärkung nach Anspruch 4, wobei die Zusammensetzung zur Gurtbeschichtung ein Latex aus einem zweiten Gummi, das von dem ersten Gummi verschieden ist, derart umfaßt, daß ein Verhältnis des zweiten Gummis zu einem Feststoffgehalt der Zusammensetzung 60 Gew.-% oder weniger ist.

**6.** Verstärkungsgurt zur Gummiverstärkung nach Anspruch 5, wobei das Latex aus einem zweiten Gummi wenigstens ein aus der aus einem Butadien-Styrol-Copolymer-Latex, einem dicarboxylierten Butadien-Styrol-Copolymer-Latex, einem Vinylpyridin-Butadien-Styrol-Terpolymer-Latex, einem Isoprengummi-Latex, einem Chloroprengummi-Latex, einem chlorsulfonierten Polyethylen-Latex und einem Acrylnitril-Butadien-Copolymer-Latex mit einem Jodwert über 120 Latex bestehenden Gruppe gewähltes Latex ist.

**7.** Verstärkungsgurt zur Gummiverstärkung nach Anspruch 4, wobei das Gewicht der Beschichtungsschicht im Bereich von 5 - 40 Gew.-% der Verstärkungsfaser ist.

**8.** Verstärkungsgurt zur Gummiverstärkung nach Anspruch 4, wobei die Verstärkungsfaser wenigstens eine Faser ist, die aus der aus einer Glasfaser, einer Aramidfaser und einer Kohlenstoffaser bestehenden Gruppe gewählt ist.

**9.** Verstärkungsgurt zur Gummiverstärkung nach Anspruch 4, wobei die Beschichtungsschicht ferner mit einer weiteren Beschichtungsschicht beschichtet ist.

EP 1 731 657 B1

**10.** Gummiprodukt, das durch den Verstärkungsgurt zur Gummiverstärkung nach Anspruch 4 verstärkt ist.


**Revendications**

**1.** Composition pour revêtement de corde comprenant un latex d'un premier caoutchouc, une résine phénolique et un produit de condensation soluble dans l'eau de résorcinol-formaldéhyde de sorte qu'un rapport du premier caoutchouc à une teneur en solides de la composition, un rapport de la résine phénolique à celle-ci, et le rapport du produit de condensation soluble dans l'eau à celle-ci sont 30 à 95 % en poids, 0,01 à 30 % en poids et 2 à 15 % en poids, respectivement, où
le premier caoutchouc est un caoutchouc de polymère hautement saturé contenant des groupes nitrile ayant un indice d'iode de 120 ou moins, et
le produit de condensation soluble dans l'eau est un produit de condensation de type novolaque.

**2.** Composition pour revêtement de corde selon la revendication 1 comprenant un latex d'un second caoutchouc différent du premier caoutchouc de sorte qu'un rapport du second caoutchouc à une teneur en solides de la composition est 60 % en poids ou moins.

**3.** Composition pour revêtement de corde selon la revendication 2 où le latex d'un second caoutchouc est au moins un latex choisi dans le groupe consistant en un latex de copolymère butadiène-styrène, un latex de copolymère butadiène-styrène dicarboxylé, un latex de terpolymère vinylpyridine-butadiène-styrène, un latex de caoutchouc d'isoprène, un latex de caoutchouc de chloroprène, un latex de polyéthylène chlorosulfoné et un latex de copolymère acrylonitrile-butadiène ayant un indice d'iode supérieur à 120.

**4.** Corde renforçante pour renforcement de caoutchouc comprenant une fibre renforçante et une couche de revêtement formée de sorte que la fibre renforçante est revêtue, où
la couche de revêtement est formée d'une composition pour revêtement de corde,
la composition pour revêtement de corde inclut un latex d'un premier caoutchouc, une résine phénolique et un produit de condensation soluble dans l'eau de résorcinol-formaldéhyde de sorte qu'un rapport du premier caoutchouc à une teneur en solides de la composition, le rapport de la résine phénolique à celle-ci, et le rapport du produit de condensation soluble dans l'eau à celle-ci sont 30 à 95 % en poids, 0,01 à 30 % en poids et 2 à 15 % en poids, respectivement,
le premier caoutchouc est un caoutchouc de polymère hautement saturé contenant des groupes nitrile ayant un indice d'iode de 120 ou moins, et
le produit de condensation soluble dans l'eau est un produit de condensation de type novolaque.

**5.** Corde renforçante pour renforcement de caoutchouc selon la revendication 4 où la composition pour revêtement de corde comprend un latex d'un second caoutchouc différent du premier caoutchouc de sorte qu'un rapport du second caoutchouc à une teneur en solides de la composition est 60 % en poids ou moins.

**6.** Corde renforçante pour renforcement de caoutchouc selon la revendication 5 où le latex d'un second caoutchouc est au moins un latex choisi dans le groupe consistant en un latex de copolymère butadiène-styrène, un latex de copolymère butadiène-styrène dicarboxylé, un latex de terpolymère vinylpyridine-butadiène-styrène, un latex de caoutchouc d'isoprène, un latex de caoutchouc de chloroprène, un latex de polyéthylène chlorosulfoné et un latex de copolymère acrylonitrile-butadiène ayant un indice d'iode supérieur à 120.

**7.** Corde renforçante pour renforcement de caoutchouc selon la revendication 4 où un poids de la couche de revêtement est dans une plage de 5 à 40 % d'un poids de la fibre renforçante.

**8.** Corde renforçante pour renforcement de caoutchouc selon la revendication 4 où la fibre renforçante est au moins une fibre choisie dans le groupe consistant en une fibre de verre, une fibre d'aramide et une fibre de carbone.

**9.** Corde renforçante pour renforcement de caoutchouc selon la revendication 4 où la couche de revêtement est revêtue en outre d'une autre couche de revêtement.

**10.** Produit de type caoutchouc renforcé par la corde renforçante pour renforcement de caoutchouc selon la revendication 4.

14

10

12
11

# Fig. 1

**EP 1 731 657 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6212572 A
- JP 8120573 A
- JP 8333564 A